Europäisches Patentamt

European Patent Office     (11) Numéro de publication : **0 181 900**

Office européen des brevets                                **B1**

(12)                  FASCICULE DE BREVET EUROPÉEN

(45) Date de publication du fascicule du brevet :     (51) Int. Cl.⁴ : **D 01 F  9/12**
   02.03.88

(21) Numéro de dépôt : **85902551.2**

(22) Date de dépôt : **09.05.85**

(86) Numéro de dépôt international :
   **PCT/FR 85/00110**

(87) Numéro de publication internationale :
   **WO/8505383 (05.12.85 Gazette 85/26)**

(54) **PROCEDE DE PRODUCTION DE FIBRES DE CARBONE VAPO-DEPOSEES A PARTIR DE METHANE.**

(30) Priorité : **10.05.84 FR 8407823**

(43) Date de publication de la demande :
   **28.05.86 Bulletin 86/22**

(45) Mention de la délivrance du brevet :
   **02.03.88 Bulletin 88/09**

(84) Etats contractants désignés :
   **AT BE CH DE GB IT LI LU NL SE**

(56) Documents cités :
   **Chemical Abstracts, vol. 83, no. 20, 17 November
   1975, Columbus, Ohio (US), p. 82, abstract 165664w
   Applied Physics Letters, vol. 42, no. 8, April 1983,
   American Institute of Physics, New York (US),
   G.G.Tibbetts: "Carbon fibers produced by pyrolysis
   of natural gas in stainless steel tubes", p. 666-668
   Japanese Patents Gazette, Sect. F, Textiles, Week XI,
   10. February 1976, Derwent Publication Ltd., London
   (GB)**

(73) Titulaire : **LE CARBONE LORRAINE
   Tour Manhattan - La Défense 2, 5-6, place de l'Iris,
   F-92400 Courbevoie (FR)**

(72) Inventeur : **COULON, Michel
   13, boulevard de Jomardière
   F-38120 St. Egreve (FR)**
   Inventeur : **KANDANI, Najib
   7, rue des Crêtes
   Jnane Chekouri Safi (MA)**
   Inventeur : **BONNETAIN, Lucien
   Le Penet
   F-38410 St. Martin d'Uriage (FR)**
   Inventeur : **MAIRE, Jacques
   10, rue du Jourdain
   F-75020 Paris (FR)**

(74) Mandataire : **Pascaud, Claude et al
   PECHINEY 28, rue de Bonnel
   F-69433 Lyon Cedex 3 (FR)**

L'invention concerne un procédé de production de fibres de carbones vapodéposées à partir de méthane.

A l'heure actuelle, les fibres de carbone sont produites en quasi-totalité par pyrolyse de fibres de polyacrylonitrile (fibres dites P.A.N.). Cette méthode est d'une mise en œuvre relativement aisée, et elle offre l'avantage de fournir des fibres de longueur aussi grande qu'on le désire. Par contre, le diamètre est imposé par celui de la fibre de P.A.N. de départ, et il est le plus souvent d'environ 7 à 10 μm.

Deux autres procédés ont été étudiés : l'un dit « fibres ex-mésophase », selon lequel on part de brai filé, puis oxydé, carbonisé et graphitisé, qui est décrit par exemple dans les brevets FR 2 512 076 (MITSUI) et EP-A-27739 (Union Carbide), l'autre est dit « par vapodéposition » ; le procédé de vapodéposition consiste à produire des fibres par décomposition thermique d'un hydrocarbure sur un substrat sur lequel ont été déposées des particules de catalyseur.

Les principes de ce procédé ont été décrits par L. MEYER, Zeit. Krist. 109 (1957), p. 61, 67, par HILLERT et LANGE, Zeit. Krist. 111 (1958) p. 24-34, puis par ENDO (Thèse de doctorat, Orléans, 1975), et J. Cryst. Growth 32, 335 (1976) qui a montré que ces fibres pouvaient être obtenues de façon contrôlée et économique, et en a exposé le mécanisme qui se dédouble en un effet catalytique suivi d'un effet pyrolitique. De ce fait, on parle, parfois, de fibres « FCC » (fibres de carbone catalytique) pour désigner ces produits.

Le procédé mis au point par M. ENDO pour obtenir des fibres en grande quantité, et en grandes longueurs consiste à envoyer un mélange hydrogène-benzène sans préchauffache dans un réacteur cylindrique contenant un substrat (tube de graphite, céramique...) dont la surface a été activée par dépôt de particules métalliques. Le réacteur est dans un four tubulaire qui le soumet à un rampe de chauffe de 950 °C à 1 100 °C. La taille des fibres est très sensible à la rampe de chauffe, au débit total, à la composition des gaz et à la géométrie du réacteur. Suivant les conditions de préparation, le diamètre des fibres varie de quelques milliers d'Angströms (1Å = $10^{-10}$ m) à quelques dizaines de μm et la longueur de quelques centimètres à quelques dizaines de centimètres. Les fibres ainsi obtenues ont une charge de rupture de 1 à 3 GPa, un module d'Young de 200 à 300 GPa, une résistivité électrique de $10^{-3}$ Ω.cm.

Dans la demande de brevet japonais (KOKAI-51/33210 -Showa-Denko-) on décrit un procédé de préparation de fibres de carbone par vapodéposition, à partir d'un mélange d'hydrogène et d'un hydrocarbure cyclique (benzène, toluène) ou aliphatique (éthane, octane), dans un réacteur de quartz, à une température comprise entre 1 030 et 1 300 °C.

La germination est effectuée pendant 10 à 30 secondes, avec une vitesse de gaz de S x (100 à 1 500) cm/min, S étant la section du tube en $cm^2$ ; la croissance des fibres s'effectue avec une vitesse de gaz de 10 à 30 cm/min, en 30 à 180 minutes. Ce procédé permet d'obtenir des fibres de 7 à 50 μm de diamètre et de 30 à 180 mm de long. Ce brevet ne fait pas allusion à la présence d'un catalyseur.

Dans la demande de brevet japonais KOKAI 57/117662 (publiée le 22.7.82) au nom de SHOWA-DENKO, on décrit une méthode analogue à la précédente, avec un catalyseur choisi parmi les métaux réfractaires des groupes 4A, 5A, 6A, et 8, et, plus particulièrement : Ti, Zr, V, Nb, Cr, Mo et Mn.

Ces mêmes catalyseurs avaient déjà été revendiqués dans une précédente demande de brevet japonais de SHOWA-DENKO (KOKAI 52/103528, publiée le 30/8/77) avec une préférence pour Fe, Co, Ni, V, Nb, et Ta, l'hydrocarbure étant choisi parmi le benzène, le toluène, le méthane, l'éthane, le propane, le butane, le propylène, le cyclohexane, le gaz porteur étant l'hydrogène ou l'argon.

A l'heure actuelle, ces procédés n'ont pas encore permis la mise en œuvre d'une production industrielle de masse, car certains paramètres ne sont pas totalement maitrisés.

L'objet de l'invention est un procédé de production de fibres de carbone vapodéposées, selon lequel du méthane, entraîné par un gaz porteur, est pyrolysé sur un substrat dans un réacteur à passage, à température comprise entre 950 et 1 300 °C, en deux stades successifs, un stade de germination et un stade de croissance selon lequel :

1. On prépare un mélange gazeux comprenant de 90 à 60 % et de préférence de 85 à 65 % en volume d'hydrogène et/ou d'hélium et de 10 à 40 % et, de préférence de 15 à 35 % en volume de méthane.

2. On fait circuler ce mélange, dans le réacteur, sur un substrat comportant de $10^{-8}$ à $10^{-4}$ $g/cm^2$ d'un catalyseur choisi parmi le fer, le nickel, le colbat ou des alliages de ces métaux.

3. On amorce la germination et la croissance en longueur des fibres de carbone à une température t1 stabilisée entre 950 et 1 050 °C, avec une vitesse sensiblement constante du mélange gazeux comprise entre 10 et 50 centimètres par seconde, pendant une durée comprise entre 10 et 90 minutes.

4. On provoque la croissance en diamètre des fibres de carbone à une température t2 supérieure à 1 050 °C, pouvant atteindre environ 1 300 °C, avec une vitesse du mélange gazeux progressivement croissante.

5. On refroidit le réacteur sous gaz inerte avant d'extraire les fibres de carbone.

Les caractéristiques et exemples de mise en œuvre qui vont être décrits permettront de préciser les différents paramètres de l'invention.

## 1. Le réacteur

On a opéré dans un réacteur constitué par un tube en réfractaire tel que du quartz de 35 mm de diamètre interne et de 1 mètre de long, chauffé par un four électrique à résistance dont la vitesse de montée en température peut être commandée par un microprocesseur de façon qu'elle puisse varier linéairement, en fonction du temps, entre ces deux températures t1 et t2, la vitesse pouvant être, choisie par exemple (mais non limitativement) en 0,5 et 5 °C par minute, et les températures t1 et t2 entre 950 et 1 300 °C ; cette limite étant imposée par la tenue et la durée de vie du tube de quartz. La partie active du réacteur, dans laquelle va s'effectuer la production des fibres de carbone, est constituée par un substrat placé dans la zone centrale du tube de quartz où la température est homogène.

On a utilisé trois types de substrats :

du quartz (sous forme d'une lame mince)

un tube de graphite polycristallin à grain fin coaxial et en contract avec le tube de quartz

du « Papyex » (Marque de fabrique) fabriqué par la Sté Le Carbone-Lorraine, par laminage de graphite exfolié, sous forme d'une feuille de 0,27 mm d'épaisseur (densité 0,7) enroulée en tube et insérée dans le tube de quartz.

## 2. Le catalyseur

C'est un métal à base de fer, de nickel, de cobalt ou d'alliage de ces métaux déposé sur le substrat par différents moyens tels que :

Substrat frotté avec du papier abrasif sur lequel on a déposé de la limaille de fer,

Imprégnation par une suspension de NiO dans de l'acétone avec une concentration c = $5.10^{-4}$ g.cm$^{-3}$.

Dépôt d'un alliage Fe-Co (par exemple à 37,5 % en poids de cobalt dans du fer) en frottant le substrat avec un lingot de cet alliage, lui-même préalablement frotté avec du papier à polir afin d'arracher des particules fines (cette teneur de 37,5 % en Co n'est pas une caractéristique limitative).

Dépôt de fer par pulvérisation cathodique. Cette technique consiste à volatiliser les particules à déposer par bombardement d'une cible au moyen d'un flux d'ions accélérés à partir d'un plasma gazeux.

Les dépôts de Fe qu'on a réalisés par cette technique ont des épaisseurs estimées à 25, 150 et 300 Å (2,5 15,0 et 30,0 mm).

Imprégnation du « Papyex » par une solution de nitrate de fer dans de l'éthanol. Les concentrations utilisées varient de $8.10^{-5}$ g.cm$^{-3}$ à 01 g. cm$^{-3}$. A l'aide d'une micropipette, on dépose le plus régulièrement possible sur le « Papyex » un volume de la solution de nitrate allant de 0,4 à 0,6 cm$^3$. La masse de fer par unité de surface du substrat est calculée à partir de la concentration et du volume de la solution déposée sur le substrat. Elle correspond à des valeurs allant de $3,5.10^{-8}$ g/cm$^2$ à 4.10 g/cm$^2$. Des résultats équivalents ont été obtenus par immersion du Papyex dans la solution alcoolique.

En pratique, les concentrations optimales de catalyseurs conduisant à une production satisfaisante et reproductible de fibres se situent entre $1.10^{-8}$ et $1.10^{-4}$ grammes par cm$^2$ de substrat.

## 3. L'hydrocarbure et le gaz porteur

Il est apparu que le méthane donnait des résultats sensiblement supérieurs à ceux des autres hydrocarbures, en ce qui concerne le rendement et la moindre sensibilité à la nature du catalyseur : ce procédé permet d'obtenir par une simple imprégnation au nitrate de fer des rendements qui nécessitent, dans l'état de l'art défini par les brevets antérieurs, l'utilisation d'un catalyseur sous forme de particules thermostables de 30,0 mm (300 Å) obtenues par une technique d'évaporation très délicate (demande de brevet japonais KOKAI 57/117662), il en est de même en ce qui concerne la régularité et la maitrise des différents paramètres du procédé. Le gaz porteur est l'hélium, ou l'hydrogène ou un mélange des deux.

## 4. Conditions opératoires

La vitesse, la température et la composition du mélange gazeux sont des facteurs déterminants.

Composition :

Les plus favorables se situent entre 90 et 60 et, de préférence, entre 85 et 65 % d'hélium et/ou d'hydrogène et entre 10 et 40 et, de préférence, entre 15 et 35 % en volume de méthane.

Température :

La température optimale de la phase de germination et de croissance en longueur se situe entre 950 et 1 050 °C. La température optimale de la phase de croissance en diamètre se situe à partir de 1 050 °C et jusqu'à 1 300 °C, sans que cette valeur soit une limite absolue. La température de la phase de germination correspond à la formation optimale d'une « densité » de fibres optimale, que l'on situe aux environs de $10^3$ fibres par cm$^2$ de surface de support, cette densité passant ensuite et se stabilisant à $10^4$ - $10^5$ fibres/cm$^2$ au début de la phase de croissance en diamètre.

Vitesse

Si la vitesse du mélange gazeux est relativement lente, la mise en équilibre thermique se fait rapidement dès l'entrée dans le tube de quartz, et les gaz arrivent à la température de réaction dans la zone active où est placé le catalyseur. C'est le cas lorsque la vitesse est inférieure à 20 centimètres par minute. A vitesse plus grande, il est nécessaire de prévoir un dispositif qui facilite le transfert de chaleur entre le tube de quartz et le gaz, par exemple un tampon de feutre de carbone disposé dans le premier tiers du tube de quartz, du côté de l'entrée des gaz. On peut aussi prévoir, en amont du réacteur un four séparé pour le préchauffage du gaz à une température au moins égale à 500 °C

En raison du taux de transformation des gaz (pyrolyse du méthane) qui augmente fortement au cours de la croissance des fibres en diamètre, il faut augmenter le débit, donc la vitesse des gaz. Le taux de transformation dépend essentiellement de la longueur du four, de la densité des fibres, du nombre de fibres par cm$^2$ de section du réacteur, et de la surface totale développée par les fibres. Celle-ci se multiplie par au moins 1 000 au cours de la croissance.

L'augmentation possible de vitesse est alors limitée par le flux de chaleur apporté par les gaz. Cela finit par refroidir le four de façon rédhibitoire pour des vitesses supérieures à 40 cm par minute à 1 100 °C.

En pratique, les conditions optimales de mise en œuvre du procédé sont les suivantes :

la durée de la phase de germination et de croissance en longueur est comprise entre 30 et 90 minutes pour une température de 950 à 1 000 °C, et entre 10 et 30 minutes pour une température de 1 000 à 1 050 °C, et la vitesse du mélange gazeux, pendant cette phase, est stabilisée entre 10 et 50 centimètres par minute.

la phase de croissance en diamètre est effectuée avec une vitesse de montée en température comprise entre 0,5 et 5 °C/minute à partir de la température t1 de germination jusqu'à la température t2 de croissance.

la vitesse du mélange gazeux pendant la phase de croissance en diamètre est progressivement augmentée à partir d'une valeur initiale au moins égale à 10 centimètres par minute jusqu'à une valeur finale pouvant atteindre 400 centimètres par minute.

la durée de croissance en diamètre des fibres est comprise entre 30 et 120 minutes à une température comprise entre 1 050 et 1 300 °C, pour un diamètre final de fibres compris entre 10 et 20 micromètres.

La vitesse de montée en température, dans la phase initiale du procédé (germination) influence fortement le rendement en carbone (exprimé en rapport % du carbone introduit dans le réacteur sous forme de méthane, au carbone récupéré sous forme de fibre). Le rendement global du procédé peut, par exemple, varier de 3 % à 15 % quand la vitesse de montée en température augmente dans le rapport de 1 à 8 (de 0,5 à 4 °C par minute par exemple).

Exemple 1

Dans le réacteur précédent décrit, alimenté avec un mélange gazeux Hélium 85 % + Méthane 15 % (en volume), avec un débit total de 180 cm$^3$/minute et un catalyseur au nitrate de fer sur substrat de « PAPYEX », on a :

préchauffé le four sous courant d'hydrogène jusqu'à 950 °C.

Stabilisé la température à 950 °C.

Introduit le mélange gazeux Hélium-Méthane.

Effectué la germination et la croissance en longueur des fibres pendant 15 min (à 950 °C).

A ce moment là, on avait des fibres d'environ 70 mm de long et de 5 à 20 mm de diamètre, à une densité de l'ordre de 400 fibres par centimètres carré de section utile du réacteur.

Puis on a déclenché la phase de croissance en diamètre (et d'achèvement de la croissance en longueur) en augmentant la température de 950 à 1 150 °C avec une vitese linéaire de 1 °C par minute. La germination s'est poursuivie jusqu'à environ 1 050 °C et la densité de fibres est passé à ~ 10$^3$/cm$^2$.

Lorsque la température a atteint 1 150 °C, le diamètre moyen des fibres était arrivé à environ 30 micromètres et la longueur à 70 - 90 millimètres.

On a alors coupé le chauffage du four et laissé refroidir sous un gaz inerte de faible prix tel que l'azote en vue d'extraire les fibres.

Exemple 2

Dans le même réacteur, on a effectué les mêmes opérations que dans l'exemple 1, mais avec un mélange gazeux : Hydrogène 65 %, Méthane 35 % (en volume) avec un débit total de 200 cm$^3$ par minute.

La montée en température, entre 950 et 1 150 °C, a été effectuée à une vitesse linéaire de 4 °C/min.

On est arrivé, en fin d'opération, à une densité de fibres de 10$^5$/cm$^2$, et à un diamètre moyen de 2 micromètres.

0 181 900

## Exemple 3

Dans le même réacteur, on a effectué les mêmes opérations que dans l'exemple 1, mais avec un mélange gazeux : Hydrogène 80 %, méthane 20 % (en volume) avec un débit total de 250 cm³ par minute. La montée en température a été effectuée avec une vitesse linéaire de 1 °C/minute.

On a obtenu une densité de fibres de 10³/cm² et un diamètre moyen de 20 micromètres.

Les fibres obtenues par le procédé, objet de l'invention, peuvent ensuite subir un traitement thermique de graphitation, sous gaz inerte, à une température de l'ordre de 2 800 °C à 3 200 °C, pendant une durée comprise entre 15 minutes et 2 heures. Les caractéristiques des fibres sont les suivantes :

a) Caractéristiques mécaniques :

Avant traitement thermique :
Charge de rupture : 1 à 2 GPa
Module d'Young : 100 à 300 GPa } pour un diamètre de 40 à 7 micromètres

Après traitement thermique :
Charges de rupture : 2 à 3 GPa
Module d'Young : peu changé.

b) Caractéristiques électriques

| Résistivité en $10^3$ $\Omega$. cm, dans le sens de la longueur | | |
|---|---|---|
| | Fibres de 40 µm | Fibres de 7 µm |
| Avant traitement thermique | 3,5 | 0,8 |
| Après traitement thermique | 0,080 | 0,045 |
| Après insertion d'un accepteur d'électrons + | 0,008 | 0,004 |

NB. La résistance électrique en traves est de 1 000 à 10 000 fois plus grande.

⁺ L'insertion d'un accepteur d'électron tel que $FeCl_3$, dans les fibres de carbone est connue en elle-même (cf C. HERINCKH, R. PERRET, W. RULAND, CARBON, 10, p. 711-722, 1972).

Ces très faibles résistivités, qui se situent, après insertion, au niveau de celles des conducteurs métalliques, n'avaient jamais été atteintes sur des fibres provenant d'autres hydrocarbures tels que le benzène. En outre, cela laisse espérer l'utilisation des fibres obtenues par le procédé selon l'invention, comme conducteurs électriques et confirment ainsi l'originalité de l'invention.

**Revendications**

1. Procédé de production de fibres de carbone vapodéposées, selon lequel un hydrocarbure gazeux ou vaporisé, entraîné par un gaz porteur, est pyrolysé sur un substrat dans un réacteur à passage, à une température comprises en 950 et 1300° C, en deux stades successifs, un stade de germination et un stade de croissance, caractérisé en ce que :
on prépare un mélange gazeux comprenant de 60 à 90 % et de préférence de 85 à 65 % en volume d'hydrogène et/ou d'hélium et de 10 à 40 % et, de préférence de 15 à 35 % en volume de méthane.
on fait circuler ce mélange, dans le réacteur, sur un substrat comportant de $10^{-8}$ à $10^{-4}$ g/cm² d'un catalyseur choisi parmi le fer, le nickel, le cobalt et leurs alliages.
on amorce la germination et la croissance en longueur des fibres de carbone à une température t1

5

stabilisée entre 950 et 1050° C, avec une vitesse sensiblement constante du mélange gazeux comprise entre 10 et 50 centimètres par minute pendant une durée comprise en 10 et 90 minutes.

on provoque la croissance en diamètre des fibres de carbone à une température t2 supérieure à 1050° C, pouvant atteindre 1300° C, avec une vitesse du mélange gazeux progressivement croissante.

on refroidit le réacteur sous gaz inerte avant d'extraire les fibres de carbone.

2. Procédé, selon revendication 1, caractérisé en ce que la durée de la phase de germination et de croissance en longueur est comprise en 30 et 90 minutes pour une température de 950 à 1000° C et entre 10 et 30 minutes pour une température de 950 à 1050° C.

3. Procédé, selon revendication 1, caractérisé en ce que la phase de croissance en diamètre est effectuée avec une vitesse de montée en température comprise entre 0,5 et 5° C/minute à partir de la température t1 de germination jusqu'à la température t2 de croissance en diamètre.

4. Procédé selon revendication 1, caractérisé en ce que la vitesse du mélange gazeux pendant la phase de croissance en diamètre est progressivement augmentée à partir d'une valeur initiale au moins égale à 10 centimètres par minute jusqu'à une valeur finale pouvant atteindre 400 centimètres par minute.

5. Procédé selon revendication 1 ou 3, caractérisé en ce que la durée de croissance en diamètre des fibres est comprise entre 30 et 120 minutes à une température comprise entre 1050 et 1300° C, pour un diamètre final de fibres compris entre 10 et 20 micromètres.

6. Procédé selon l'une quelconque des revendication 1 à 5, caractérisé en ce que, avant d'atteindre le substrat, le mélange gazeux est préchauffé à une température au moins égale à 500° C.

7. Procédé selon revendication 6, caractérisé en ce que le mélange gazeux est préchauffé dans un four auxiliaire disposé en amont du réacteur.

8. Procédé selon revendication 6, caractérisé en ce que le mélange gazeux est préchauffé par passage sur un échangeur thermique disposé à l'entrée du réacteur, et constitué par exemple, par un tampon de feutre de carbone ou de graphite.

9. Procédé, selon revendication 1 à 8, caractérisé en ce que le substrat est constitué par une feuille de graphite.

10. Procédé, selon l'une quelconque des revendications 1 à 10, caractérisé en ce que les fibres, après la fin du stade de croissance, sont graphitisées, à une température comprise entre 2800 et 3200° C, sous atmosphère inerte, pendant une durée comprise entre 15 min et 1 heure.

**Claims**

1. A process for the production of vapour-deposited carbon fibres wherein a gaseous or vaporised hydrocarbon which is entrained by a carrier gas is pyrolysed on a substrate in a flow reactor at a temperature of between 950 and 1300° C in two successive stages, a germination stage and a growth stage, characterised by :

preparing a gaseous mixture comprising from 50 to 90% and prefetably from 85 to 65% by volume of hydrogen and/or helium and from 10 to 40% and preferably from 15 to 35% by volume of methane ;

circulating the mixture in the reactor over a substrate comprising from $10^{-8}$ to $10^{-4}$ g/cm$^2$ of a catalyst selected from iron, nickel, cobalt and alloys thereof ;

initiating germination and growth of the carbon fibres in respect of length at a temperature t1 which is stabilised at between 950 and 1050° C, with a substantially constant velocity of the gaseous mixture of between 10 and 50 centimetres per minute for a period of between 10 and 90 minutes ;

causing growth of the carbon fibres in respect of diameter at a temperature t2 which is higher than 1050° C and which can attain approximately 1300° C, with a progressively increasing velocity of the gaseous mixture ; and

cooling the reactor under an inert gas before extracting the carbon fibres.

2. A process according to claim 1 characterised in that the duration of the phase for germination and growth in respect of length of the fibres is between 30 and 90 minutes for a temperature of 950 to 1000° C and between 10 and 30 minutes for a temperature of 950 to 1050° C.

3. A process according to claim 1 characterised in that the phase of growth of the fibres in respect of diameter is effected with a rate of rise of temperature of between 0.5 and 5° C per minute from the germination temperature t1 to the temperature t2 for growth in respect of diameter.

4. A process according to claim 1 characterised in that the velocity of the gaseous mixture during the phase of growth of the fibres in respect of diameter is progressively increased from an initial value that is at least equal to 10 centimetres per minute to a final value which may attain 400 centimetres per minute.

5. A process according to claim 1 or claim 3 characterised in that the duration of the growth of the fibres in respect of diameter is between 30 and 120 minutes at a temperature of between 1050 and 1300° C, for a final fibre diameter of between 10 and 200 micrometres.

6. A process according to any one of claims 1 to 5 characterised in that, before reaching the substrate, the gaseous mixture is preheated to a temperature that is at least equal to 500° C.

7. A process according to claim 6 characterised in that the gaseous mixture is preheated in an auxiliary furnace disposed upstream of the reactor.

8. A process according to claim 6 characterised in that the gaseous mixture is preheated by passing over a heat exchanger which is disposed at the intake of the reactor and which is formed for example by a graphite or carbon felt plug.

9. A process according to claims 1 to 8 characterised in that the substrate is formed by a sheet of graphite such as « PAPYEX ».

10. A process according to any one of claims 1 to 10 characterised in that the fibres, after the end of the growth stage, are graphitised at a temperature of between 2800 and 3200° C under an inert atmosphere for a period of between 15 minutes and 1 hour.


**Patentansprüche**

1. Verfahren zur Herstellung von aus Dampf abgeschiedenen Kohlenstoffasern, gemäß dem ein gasförmiger oder verdampfter, von einem Trägergas mitgeförderter Kohlenwasserstoff auf einem Substrat bei einer Temperatur im Bereich von 950 bis 1300° C in einem Reaktionsgefäß mit Durchstrom in zwei aufeinanderfolgenden Stufen, einer Keimbildungsstufe und einer Wachstumsstufe, pyrolysiert wird, dadurch gekennzeichnet,

daß man ein gasförmiges Gemisch aus 60 bis 90 Vol.% und vorzugsweise aus 85 bis Vol.% Wasserstoff und/oder Helium und aus 10 bis 40 Vol.% und vorzugsweise 15 bis 35 Vol.% Methan herstellt,

dieses Gemisch im Reaktionsgefäß über ein Substrat zirkulieren läßt, das $10^{-8}$ bis $10^{-4}$ g/cm$^2$ eines unter Eisen, Nickel, Kobalt und deren Legierungen gewählten Katalysators aufweist,

die Keimbildung und das Längenwachstum der Kohlenstffasern bei einer zwischen 950 und 1050° C stabilisierten Temperatur t1 mit einer praktisch konstanten Geschwindigkeit des gasförmigen Gemisches im Bereich von 10 bis 50 cm/min während einer Dauer im Bereich von 10 bis 90 min in Gang setzt,

das Durchmesserwachstum der Kohlenstoffasern bei einer Temperatur t2 über 1050° C, die 1300° C erreichen kann, mit einer fortlaufend steigenden Geschwindigkeit des Gasgemisches hervorruft und

das Reaktionsgefäß vor der Entnahme der Kohlenstoffasern unter inertem Gas abkühlt.

2. Verfahren nach Anpruch 1, dadurch gekennzeichnet, daß die Dauer der Keimbildungs- und Längenwachstumsphase im Bereich von 30 bis 90 min für eine Temperatur von 950 bis 1000° C und im Bereich von 10 bis 30 min für eine Temperatur von 950 bis 1050° C liegt.

3. Verfahren nach Anspruch 1, dadurch gekennzeichnet, daß die Durchmesserwachstumsphase mit einer Temperatur-anstiegsgeschwindigkeit im Bereich von 0,5 bis 5° C/min von der Keimbildungstempe-ratur t1 bis zur Durchmesserwachstumstemperatur t2 durchgeführt wird.

4. Verfahren nach Anpruch 1, dadurch gekennzeichnet, daß die Geschwindigkeit des gasförmigen Gemisches während der Durchmesserwachstumsphase von einem Anfangswert von wenigstens gleich 10 cm/min bis zu einem Endwert, der 400 cm/min erreichen kann, fortlaufend gesteigert wird.

5. Verfahren nach Anpruch 1 oder 3, dadurch gekennzeichnet, daß die Dauer des Durchmesserwachstums der Fasern für einem Faserenddurchmesser im Bereich von 10 bis 20 μm zwischen 30 und 120 min bei einer Temperatur im Bereich von 1050 bis 1300° C liegt.

6. Verfahren nach irgendeinem der Ansprüche 1 bis 5, dadurch gekennzeichnet, daß das gasförmige Gemisch vor Erreichen des Substrats auf eine Temperatur von wenigstens 500° C vorerhitzt wird.

7. Verfahren nach Anspruch 6, dadurch gekennzeichnet, daß die gasförmige Gemisch in einem stromauf des Reaktionsgefäßes angeordneten Hilfsofen vorerhitzt wird.

8. Verfahren nach Anspruch 6, dadurch gekennzeichnet, daßdie gasförmige Gemisch mittels Durchstroms über einem Wärmetauscher vorerhitzt wird, der am Eingang des Reaktionsgefäßes angeordnet ist und beispielsweise aus einem Kohlenstoff- oder Graphitfilzpfropfen besteht.

9. Verfahren nach Anspruch 1 bis 8, dadurch gekennzeichnet, daß das Substrat aus einer Graphitfolie besteht.

10. Verfahren nach irgendeinem der Ansprüche 1 bis 10 (9), dadurch gekennzeichnet, daß die Fasern nach dem Ende der Wachstumsstufe bei einer Temperatur im Bereich von 2800 bis 3200° C in inerter Atmosphäre während einer Dauer im Bereich von 15 min bis 1 h graphitisiert werden.